(19) **Europäisches Patentamt European Patent Office Office européen des brevets**

(11) **EP 1 778 534 B1**

(12) **FASCICULE DE BREVET EUROPEEN**

(45) Date de publication et mention de la délivrance du brevet:
**09.03.2011 Bulletin 2011/10**

(51) Int Cl.:
**B62D 9/00** *(2006.01)*

(21) Numéro de dépôt: **05792043.1**

(22) Date de dépôt: **18.07.2005**

(86) Numéro de dépôt international:
**PCT/FR2005/050591**

(87) Numéro de publication internationale:
**WO 2006/021705 (02.03.2006 Gazette 2006/09)**

(54) **PROCEDE DE COMMANDE D'UN VEHICULE AU MOYEN D'UN DISPOSITIF DE FREINAGE PILOTAGE**

**VERFAHREN ZUR STEUERUNG EINES FAHRZEUGS MITHILFE EINER STEUERBAREN BREMSVORRICHTUNG**

**METHOD FOR CONTROLLING A VEHICLE USING A CONTROLLABLE BRAKING DEVICE**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **03.08.2004 FR 0408568**

(43) Date de publication de la demande:
**02.05.2007 Bulletin 2007/18**

(73) Titulaire: **RENAULT S.A.S.**
**92100 Boulogne Billancourt (FR)**

(72) Inventeurs:
- **RICHER, Didier**
  **F-78300 POISSY (FR)**
- **BOONSTRA, Christian**
  **F-78690 LES ESSARTS LE ROI (FR)**
- **CHAUVELIER, Eric**
  **F-78320 LE MESNIL SAINT DENIS (FR)**

(56) Documents cités:
| | |
|---|---|
| **EP-A- 0 231 160** | **EP-A- 0 829 416** |
| **EP-A- 1 428 740** | **US-A- 3 893 528** |
| **US-A1- 2002 189 889** | |

**Description**

L'invention concerne la commande des véhicules automobiles, en particulier la commande du freinage et de la direction du véhicule.

On connaît des véhicules comportant des systèmes de freinage pilotables (dénommés ESP ou contrôle de trajectoire) permettant de freiner individuellement chaque roue du véhicule. Un tel système se déclenche en urgence lorsque la trajectoire réelle du véhicule présente un écart trop important avec une trajectoire de référence ou trajectoire cible calculée à partir d'un modèle basé par exemple sur l'angle du volant et la vitesse du véhicule. Ce système agit jusqu'à remettre le véhicule sur une trajectoire proche de celle estimée par le modèle, c'est-à-dire jusqu'à ce que le seuil de désactivation du système soit atteint. C'est ainsi que, en cas de sous virage effectué par le véhicule, le système freine les quatre roues avec des efforts plus importants sur les roues intérieures et agit également sur le couple moteur. Il s'ensuit un moment de lacet et une décélération qui permettent d'atteindre la trajectoire visée ou de s'en approcher.

Un but de l'invention est d'améliorer encore le contrôle de la trajectoire du véhicule.

A cet effet, on prévoit selon l'invention un procédé de commande d'un véhicule selon la revendication 1 annexée.

Ainsi, la commande du freinage permet de tenir compte d'une action du conducteur du véhicule sur le volant afin que la trajectoire du véhicule corresponde plus fidèlement au souhait du conducteur traduit par ce dernier par son action sur le volant.

L'invention pourra présenter en outre au moins l'une quelconque des caractéristiques suivantes :

- on commande le freinage en fonction d'un couple exercé sur le volant ;
- on commande le freinage en fonction d'une position angulaire du volant ;
- on commande le freinage en fonction d'une vitesse du véhicule ;

Le document EP 0 829 416 décrit un procédé de commande d'un véhicule selon le préambule de la revendication 1, dans lequel on commande un freinage de roues en fonction d'une donnée relative à un volant de direction.

Le document EP 0 231 160 décrit un procédé similaire mais appliqué essentiellement aux véhicules à chenilles.

- on commande le freinage au moyen d'un système de pilotage individuel du freinage de chaque roue ; et
- on commande le freinage en l'absence d'une défaillance d'un dispositif de direction assistée.

On connaît en outre des véhicules équipées d'un système de direction assistée (dénommé DAE, DAH, GEP, ...). L'objectif de ces systèmes est d'apporter un couple pour aider le conducteur à tourner les roues afin de diriger le véhicule. Ces systèmes participent par conséquent à la sécurité du conducteur et au confort de conduite. Mais si un tel système connaît une défaillance, sa désactivation totale ou partielle peut perturber la trajectoire du véhicule. Ainsi, si une coupure de puissance a lieu sur le système de direction assistée, le véhicule peut devenir difficile à contrôler par le conducteur.

Cet inconvénient est d'autant plus sensible que de nos jours les véhicules sont de plus en plus lourds et les systèmes de direction assistée de plus en plus puissants en vue d'améliorer le confort et la sécurité. Ainsi, les véhicules fabriqués il y a quelques années étaient plus légers, de sorte que les problèmes résultant d'une perte d'assistance dans le système de direction étaient moins critiques. C'est le déploiement de ces systèmes sur des véhicules haute gamme et lourds qui conduit à rendre plus critiques les défaillances de ces systèmes.

Avantageusement, dans le cadre du procédé de l'invention, on commande le freinage en cas de défaillance d'un dispositif de direction assistée.

Ainsi, la commande du freinage permet de limiter la gravité d'une perte d'assistance de direction en aidant à diriger le véhicule.

Le procédé selon l'invention pourra présenter en outre au moins l'une quelconque des caractéristiques suivantes :

- on détecte une défaillance d'un dispositif de direction assistée ;
- on commande le freinage en vue de réduire un écart entre une trajectoire réelle du véhicule et une trajectoire de référence ;
- en l'absence d'une défaillance d'un dispositif de direction assistée, on commande le freinage en fournissant à un système de pilotage un premier paramètre relatif au volant et en présence de la défaillance, on commande le freinage en fournissant au système à la place du premier paramètre, un deuxième paramètre relatif au volant et différent du premier paramètre ; et
- les premier et deuxième paramètres P1 et P2 sont du type :

P1 = angle_ volant-mesuré ; et
P2 = angle_volant_mesuré + K* couple_volant,

Où « angle_volant_mesuré » désigne une position angulaire du volant ;

K est un facteur multiplicatif constant ou variable ; et

« couple_volant » désigne un couple exercé sur le volant par un conducteur.

On prévoit également selon l'invention un système de commande d'un véhicule comprenant des moyens aptes à commander un freinage de roues avant et arrière associées à un même côté du véhicule et agencé pour commander le freinage en fonction d'une donnée relative à un volant de direction, par exemple sans commander un freinage d'autres roues du véhicule.

On prévoit enfin selon l'invention un véhicule équipé d'un système selon l'invention.

D'autres caractéristiques et avantages de l'invention apparaîtront encore dans la description suivante d'un mode préféré de réalisation donné à titre d'exemple non limitatif en référence aux dessins annexés sur lesquels :

- la figure 1 est une vue schématique d'un véhicule comprenant un système selon l'invention ; et
- la figure 2 est un organigramme montrant le déroulement du procédé selon l'invention mis en oeuvre par le système du véhicule de la figure 1.

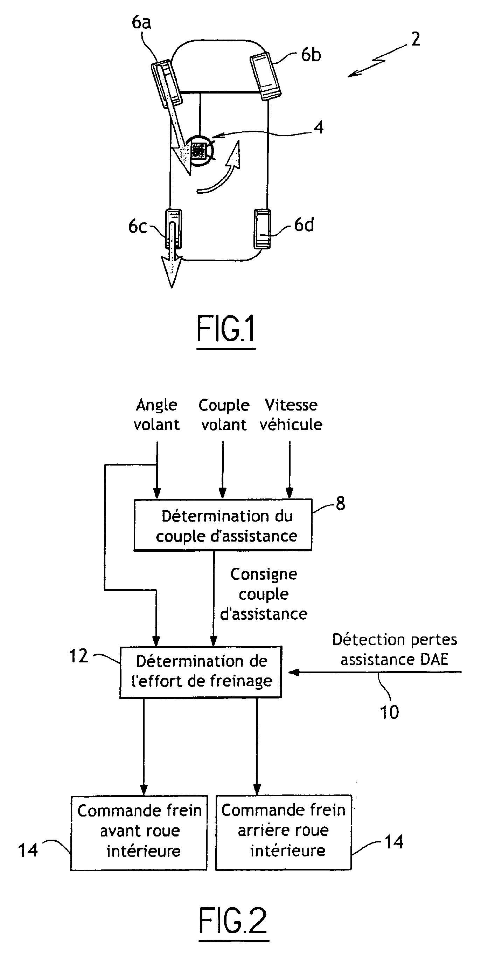

On va décrire un mode préféré de réalisation du système selon l'invention mettant en oeuvre le procédé selon l'invention à l'aide des figures 1 et 2.

Le véhicule 2 est équipé d'un dispositif de direction assistée 4 comprenant en particulier un actionneur tel qu'un moteur électrique. Ce dispositif, de façon connue en elle-même, apporte un couple pour aider le conducteur à tourner les roues à partir du volant de direction afin de diriger le véhicule notamment dans un virage ou en sortie de virage.

Le véhicule est également équipé d'un dispositif de freinage permettant de piloter individuellement le freinage de chacune des quatre roues 6a-6d du véhicule. De façon connue en elle-même, ce système, par exemple du type ESP, se déclenche automatiquement lorsque la trajectoire réelle du véhicule présente un écart trop important avec une trajectoire de référence calculée par un calculateur de bord à partir d'un modèle basé par exemple sur l'angle du volant et la vitesse du véhicule.

Plus globalement, le véhicule a une architecture matérielle comprenant un ou des capteurs permettant d'estimer la volonté du conducteur en terme de direction (par exemple la position angulaire du volant ainsi que le couple exercé par le conducteur sur le volant) et des moyens électroniques de calcul faisant partie du système de freinage pilotable et/ou du dispositif de direction assistée.

De façon connue en elle-même, le dispositif d'assistance de direction détermine un couple d'assistance, comme illustré à l'étape 8 de la figure 2, à partir de données telles que l'angle du volant, le couple exercé sur le volant par le conducteur et la vitesse du véhicule. Le couple d'assistance sera déterminé à partir d'au moins l'une quelconque de ces données et de préférence d'une combinaison des trois.

Le dispositif de direction assistée est équipé en l'espèce de façon connue en elle-même de moyens de surveillance de son bon fonctionnement qui lui permettent de détecter une panne éventuelle partielle ou totale. Si cette panne ne permet plus un fonctionnement sûr du dispositif, la puissance mécanique nominale ne sera plus fournie au conducteur pour l'assistance de la commande de direction.

Dans le présent exemple, lorsque le dispositif de direction assistée ne connaît pas de défaillance, on commande le freinage au moyen du dispositif de freinage pilotable en fournissant au dispositif un premier paramètre P1 relatif au volant qui est en l'espèce la position angulaire du volant telle que mesurée par un capteur adapté.

En revanche, lorsqu'une telle défaillance est détectée par le calculateur, ce dernier communique au système de freinage une demande d'assistance, comme cela est illustré à l'étape 10 de la figure 2.

Dans le présent exemple, pour provoquer une assistance par le système de freinage ESP, on indique au système que le véhicule se trouve dans une situation de sous virage. En d'autres termes, on demande au système de freinage d'agir comme si l'on était en sous virage. On dit que le véhicule effectue un sous virage lorsque sa trajectoire présente un rayon de courbure supérieur au rayon de courbure de la trajectoire cible ou trajectoire modèle telle que calculée par le calculateur. En d'autres termes, la trajectoire effective se trouve à l'extérieur de la trajectoire modèle. En effet, sachant que le conducteur exerce sur le volant un couple qui n'est plus amplifié par le système de direction, le véhicule aura tendance à tourner moins que le souhaite le conducteur.

En présence de la défaillance du dispositif de direction assistée, on commande le dispositif de freinage pilotable en remplaçant la fourniture du premier paramètre P1 par un deuxième paramètre P2 toujours relatif au volant et différent du premier paramètre.

En l'espèce, ce deuxième paramètre P2 est égal à la somme du premier paramètre P1 (la position angulaire mesurée) et du couple exercé sur le volant préalablement multiplié par un coefficient. En d'autres termes, la donnée relative au volant transmise au dispositif de freinage est du type :

$$Angle\_volant\_transmis = angle\_volant\_mesuré + K * couple\_volant$$

Le couple exercé sur le volant est mesuré de façon connue en elle-même par un capteur adapté.

K pourra être un facteur constant ou variable fonction d'un ou plusieurs paramètres relatifs au véhicule (angle ou vitesse du volant, vitesse du véhicule, accélération transversale, lacet) ou de leurs dérivées.

Par conséquent, plus le couple mesuré sur le volant sera fort, plus la valeur transmise au système de freinage concernant la position angulaire du volant sera augmentée afin d'exprimer le sous virage et de demander l'aide en conséquence du système de freinage.

A partir de cette donnée, et comme illustré à l'étape 12 de la figure 2, le système de freinage va provoquer un couple de freinage asymétrique permettant de mieux garder la trajectoire souhaitée par le conducteur. Ce couple est exercé sur les roues intérieures par référence au virage qui sont en l'espèce sur la figure 1 les roues 6a et 6c. Aucune commande de freinage n'est envoyée aux roues 6b et 6d correspondant à l'autre côté du véhicule et qui sont les roues extérieures. Les commandes de freinage envoyées aux roues intérieures sont illustrées aux étapes 14 de la figure 2.

De même, lorsque le conducteur voudra ensuite changer de direction, il appliquera sur le volant un couple en direction inverse, ce qui entraînera une minoration de l'angle transmis aux roues. Cette situation sera traitée comme une situation de survirage entraînant les corrections appropriées par le dispositif de freinage pilotable.

En d'autres termes, la stratégie de commande mise en oeuvre par le procédé de l'invention se matérialise par la détection de l'insuffisance de l'assistance de direction à partir de la détection d'une défaillance, puis par le calcul d'un couple de freinage asymétrique qui permet de réduire au mieux l'écart entre la trajectoire souhaitée par le conducteur et celle prise par le véhicule du fait des lois de la dynamique et de l'insuffisance d'assistance. Autrement dit, l'invention permet la génération d'un couple de freinage pour amortir l'écart de trajectoire entraîné par le passage en mode refuge du dispositif de direction, mode refuge qui sera en général le mode manuel.

Naturellement, l'assistance par le freinage des roues ne remplaçant pas complètement l'assistance de direction, le procédé comprendra une étape d'envoi d'un signal d'alerte au conducteur pour lui signaler la nécessité de mettre le véhicule en sécurité dès que possible.

L'invention permet d'améliorer le suivi de la trajectoire du véhicule, et en particulier l'évitement d'obstacles.

Comme on vient de le voir, lorsqu'on détecte une perte d'assistance totale ou partielle au niveau du dispositif de direction, on détermine un couple d'assistance voulu par le conducteur à partir de paramètres tels que la vitesse du véhicule, la position angulaire du volant et l'angle du volant. Sachant que le moteur électrique ne peut pas fournir ce couple d'assistance, on définit un effort de freinage sur les roues intérieures à partir du couple d'assistance, ce qui permet de diminuer le couple à fournir par le conducteur sur le volant de direction.

Dans le cadre de l'invention, on utilise les capteurs et l'actionneur du dispositif de freinage pilotable pour aider à diriger le véhicule.

Dans un autre mode de réalisation, on pourra prévoir que la mesure de la position angulaire du volant est envoyée au calculateur telle qu'elle est mesurée, donc sans modification. Dans ce cas, le système de freinage effectue entièrement la correction de trajectoire.

Dans un autre mode de réalisation, on pourra prévoir que le procédé selon l'invention est mis en oeuvre même en l'absence de défaillance du dispositif d'assistance de direction. En d'autres termes, on considère que la limitation de la vitesse du volant par le dimensionnement du système d'assistance de direction est en soi une forme de défaillance et qu'une assistance procurée par le système de freinage pilotable est dans ce cas aussi bénéfique. L'invention réalise alors une amélioration de la dynamique du véhicule et n'est pas réservée à un mode dégradé. Le système de freinage pilotable est donc utilisé en permanence pour assister le conducteur dans la commande du véhicule.

Bien entendu, on pourra apporter à l'invention de nombreuses modifications sans sortir du cadre de celle-ci.

On pourra modifier la loi de commande du dispositif de freinage pilotable. Cette loi pourra ainsi prendre en compte la vitesse du véhicule et ses dérivés, les fonctions dérivées de la position angulaire du volant, des variations de la mesure du lacet, la trajectoire du véhicule et l'accélération transversale.

On pourra prévoir que la correction de direction est effectuée en supplément par le dispositif de freinage pilotable en mettant en oeuvre un freinage aussi sur chacune des quatre roues du véhicule, de sorte que ce freinage n'est pas exercé toujours sur les roues correspondant au côté interne du virage.

**Revendications**

1. Procédé de commande d'un véhicule (2), dans lequel on commande un freinage de roues avant et arrière (6a, 6c) associées à un même côté du véhicule en fonction d'une donnée relative à un volant de direction, par exemple sans commander un freinage d'autres roues (6b, 6d) du véhicule, **caractérisé en ce que** :

- en l'absence d'une défaillance d'un dispositif de direction assistée, on commande le freinage en fournissant à un système de pilotage un premier paramètre (P1) relatif au volant ; et

- en présence de la défaillance, on commande le freinage en fournissant au système à la place du premier paramètre, un deuxième paramètre (P2) relatif au volant et différent du premier paramètre ;

les premier et deuxième paramètres P1 et P2 étant du type :

P1 = angle_volant_mesuré; et

P2 = angle_volant_mesuré + K* couple_volant,

Où « angle_volant_mesuré » désigne une position angulaire du volant ;

K est un facteur multiplicatif constant ou variable ; et

« couple_volant» désigne un couple exercé sur le volant par un conducteur.

2. Procédé selon la revendication précédente, **caractérisé en ce qu'**on commande le freinage en fonction d'un couple exercé sur le volant.

3. Procédé selon l'une quelconque des revendications précédentes, **caractérisé en ce qu'**on commande le freinage en fonction d'une position angulaire du volant.

4. Procédé selon l'une quelconque des revendications précédentes, **caractérisé en ce qu'**on commande le freinage en fonction d'une vitesse du véhicule.

5. Procédé selon l'une quelconque des revendications précédentes, **caractérisé en ce qu'**on commande le freinage au moyen d'un système de pilotage individuel du freinage de chaque roue.

6. Procédé selon l'une quelconque des revendications précédentes, **caractérisé en ce qu'**on commande le freinage en l'absence d'une défaillance d'un dispositif de direction assistée.

7. Procédé selon l'une quelconque des revendications précédentes, **caractérisé en ce qu'**on commande le freinage en cas de défaillance d'un dispositif de direction assistée.

8. Procédé selon l'une quelconque des revendications précédentes, **caractérisé en ce qu'**on détecte une défaillance d'un dispositif de direction assistée.

9. Procédé selon l'une quelconque des revendications précédentes, **caractérisé en ce qu'**on commande le freinage en vue de réduire un écart entre une trajectoire réelle du véhicule et une trajectoire de référence.

10. Système de commande d'un véhicule comprenant des moyens aptes à commander un freinage de roues avant et arrière associées à un même côté du véhicule, agencé pour commander le freinage en fonction d'une donnée relative à un volant de direction, par exemple sans commander un freinage d'autres roues du véhicule, **caractérisé en ce que** :

- en l'absence d'une défaillance d'un dispositif de direction assistée, on commande le freinage en fournissant à un système de pilotage un premier paramètre (P1) relatif au volant ; et

- en présence de la défaillance, on commande le freinage en fournissant au système à la place du premier paramètre, un deuxième paramètre (P2) relatif au volant et différent du premier paramètre ;

les premier et deuxième paramètres P1 et P2 étant du type :

P1 = angle_volant_mesuré ; et

P2 = angle_volant_mesuré + K* couple_volant,

Où « angle_volant_mesuré» désigne une position angulaire du volant ;

K est un facteur multiplicatif constant ou variable ; et

« couple_volant » désigne un couple exercé sur le volant par un conducteur

11. Véhicule **caractérisé en ce qu'**il comprend un système selon la revendication précédente.

**Claims**

1. Method for controlling a vehicle (2) in which braking of the front and rear wheels (6a, 6c) associated with one and the same side of the vehicle is commanded as a function of a data item relating to a steering wheel, for example without commanding braking of other wheels (6b, 6d) of the vehicle, **characterized in that**:

   - in the absence of failure of a power steering device, braking is commanded by supplying a control system with a first parameter (P1) relating to the steering wheel; and
   - in the presence of failure, braking is commanded by, instead of supplying the system with the first parameter, supplying it with a second parameter (P2) relating to the steering wheel and different from the first parameter; the first and second parameters P1 and P2 being of the type:

   P1 = measured_steeringwheel_angle; and
   P2 = measured_steeringwheel_angle+K*steeringwheel_ torque,
   where "measured_steeringwheel_angle"' denotes an angular position of the steering wheel;
   K is a constant or variable multiplying factor; and "steeringwheel_torque" denotes a torque applied to the steering wheel by a driver.

2. Method according to the preceding claim, **characterized in that** braking is commanded as a function of a torque applied to the steering wheel.

3. Method according to either one of the preceding claims, **characterized in that** braking is commanded as a function of an angular position of the steering wheel.

4. Method according to any one of the preceding claims, **characterized in that** braking is commanded as a function of a speed of the vehicle.

5. Method according to any one of the preceding claims, **characterized in that** braking is commanded by means of a system that individually controls the braking of each wheel.

6. Method according to any one of the preceding claims, **characterized in that** braking is commanded in the absence of failure of a power steering device.

7. Method according to any one of the preceding claims, **characterized in that** braking is commanded in the event of failure of a power steering device.

8. Method according to any one of the preceding claims, **characterized in that** failure of a power steering device is detected.

9. Method according to any one of the preceding claims, **characterized in that** braking is commanded with a view to reducing a difference between an actual path followed by the vehicle and a reference path.

10. System for controlling a vehicle comprising means capable of commanding braking of front and rear wheels associated with one and the same side of the vehicle, designed to command braking as a function of a data item relating to a steering wheel, for example without commanding braking of other wheels of the vehicle, **characterized in that**:

    - in the absence of failure of a power steering device, braking is commanded by supplying a control system with a first parameter (P1) relating to the steering wheel; and
    - in the presence of failure, braking is commanded by, instead of supplying the system with the first parameter, supplying it with a second parameter (P2) relating to the steering wheel and different from the first parameter; the first and second parameters P1 and P2 being of the type:

    P1 = measured_steeringwheel_angle; and
    P2 = measured_steeringwheel_angle+K*steeringwheel_ torque,
    where "measured_steeringwheel_angle"' denotes an angular position of the steering wheel;
    K is a constant or variable multiplying factor; and "steeringwheel_torque" denotes a torque applied to the steering wheel by a driver.

**11.** Vehicle **characterized in that** it comprises a system according to the preceding claims.

**Patentansprüche**

**1.** Verfahren zur Steuerung eines Fahrzeugs (2), bei dem ein Bremsen von Vorder- und Hinterrädern (6a, 6c), die einer gleichen Seite des Fahrzeugs zugeordnet sind, abhängig von einem Datenwert bezüglich eines Lenkrads gesteuert wird, z.B., ohne ein Bremsen anderer Räder (6b, 6d) des Fahrzeugs zu steuern, **dadurch gekennzeichnet, dass**:

- in Abwesenheit eines Ausfalls einer Servolenkungsvorrichtung das Bremsen gesteuert wird, indem an ein Steuersystem ein erster Parameter (P1) bezüglich des Lenkrads geliefert wird; und
- bei Vorhandensein des Ausfalls das Bremsen gesteuert wird, indem an das System anstelle des ersten Parameters ein zweiter Parameter (P2) bezüglich des Lenkrads und anders als der erste Parameter geliefert wird;
wobei der erste und der zweite Parameter P1 und P2 von der Art sind:

P1 = Lenkrad_Winkel_gemessen; und
P2 = Lenkrad_Winkel_gemessen + K* Lenkrad_Drehmoment,
wobei "Lenkrad_Winkel_gemessen" eine Winkelstellung des Lenkrads bezeichnet;
K ein konstanter oder variabler Multiplikationsfaktor ist; und
"Lenkrad_Drehmoment" ein von einem Fahrer auf das Lenkrad ausgeübtes Drehmoment bezeichnet.

**2.** Verfahren nach dem vorhergehenden Anspruch, **dadurch gekennzeichnet, dass** das Bremsen in Abhängigkeit von einem auf das Lenkrad ausgeübten Drehmoment gesteuert wird.

**3.** Verfahren nach einem der vorhergehenden Ansprüche, **dadurch gekennzeichnet, dass** das Bremsen in Abhängigkeit von einer Winkelstellung des Lenkrads gesteuert wird.

**4.** Verfahren nach einem der vorhergehenden Ansprüche, **dadurch gekennzeichnet, dass** das Bremsen in Abhängigkeit von einer Geschwindigkeit des Fahrzeugs gesteuert wird.

**5.** Verfahren nach einem der vorhergehenden Ansprüche, **dadurch gekennzeichnet, dass** das Bremsen mittels eines individuellen Steuersystems des Bremsens jedes Rads gesteuert wird.

**6.** Verfahren nach einem der vorhergehenden Ansprüche, **dadurch gekennzeichnet, dass** das Bremsen in Abwesenheit eines Ausfalls einer Servolenkungsvorrichtung gesteuert wird.

**7.** Verfahren nach einem der vorhergehenden Ansprüche, **dadurch gekennzeichnet, dass** das Bremsen im Fall eines Ausfalls einer Servolenkungsvorrichtung gesteuert wird.

**8.** Verfahren nach einem der vorhergehenden Ansprüche, **dadurch gekennzeichnet, dass** ein Ausfall einer Servolenkungsvorrichtung erfasst wird.

**9.** Verfahren nach einem der vorhergehenden Ansprüche, **dadurch gekennzeichnet, dass** das Bremsen gesteuert wird, um einen Abstand zwischen einer realen Fahrspur des Fahrzeugs und einer Bezugsfahrspur zu reduzieren.

**10.** System zur Steuerung eines Fahrzeugs, das Einrichtungen enthält, die ein Bremsen von Vorder- und Hinterrädern steuern können, die einer gleichen Seite des Fahrzeugs zugeordnet sind, das eingerichtet ist, um das Bremsen abhängig von einem Datenwert bezüglich eines Lenkrads zu steuern, z.B., ohne ein Bremsen anderer Räder des Fahrzeugs zu steuern, **dadurch gekennzeichnet, dass**:

- in Abwesenheit eines Ausfalls einer Servolenkungsvorrichtung das Bremsen gesteuert wird, indem an ein Steuersystem ein erster Parameter (P1) bezüglich des Lenkrads geliefert wird; und
- bei Vorhandensein eines Ausfalls das Bremsen gesteuert wird, indem an das System anstelle des ersten Parameters ein zweiter Parameter (P2) bezüglich des Lenkrads und anders als der erste Parameter geliefert wird;
wobei der erste und der zweite Parameter P1 und P2 von der Art sind:

P1 = Lenkrad_Winkel_gemessen; und
P2 = Lenkrad_Winkel_gemessen + K* Lenkrad_Drehmoment,
wobei "Lenkrad_Winkel_gemessen" eine Winkelstellung des Lenkrads bezeichnet;
K ein konstanter oder variabler Multiplikationsfaktor ist; und
"Lenkrad_Drehmoment" ein von einem Fahrer auf das Lenkrad ausgeübtes Drehmoment bezeichnet.

**11.** Fahrzeug, **dadurch gekennzeichnet, dass** es ein System nach dem vorhergehenden Anspruch enthält.

## FIG.1

Angle   Couple   Vitesse
volant  volant   véhicule

Détermination du
couple d'assistance   8

Consigne
couple
d'assistance

Détection pertes
assistance DAE

12   Détermination de
l'effort de freinage

10

14   Commande frein
avant roue
intérieure

Commande frein
arrière roue
intérieure   14

## FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0829416 A

- EP 0231160 A